# EUROPÄISCHE PATENTSCHRIFT

(11) **EP 4 062 244 B1**
(45) Veröffentlichungstag und Bekanntmachung des Hinweises auf die Patenterteilung: **01.01.2025**
(21) Anmeldenummer: 20803140.1
(22) Anmeldetag: 05.11.2020
(51) Int. Cl.: G05B 19/418, G05B 19/042, G05B 19/409

(54) **VERFAHREN ZUM VERKNÜPFEN VON INFORMATION MIT EINEM WERKSTÜCKDATENSATZ UND FLACHBETTWERKZEUGMASCHINE**
METHOD FOR LINKING INFORMATION TO A WORKPIECE DATA SET AND FLAT-BED MACHINE TOOL
PROCÉDÉ POUR LIER DES INFORMATIONS À UN ENSEMBLE DE DONNÉES DE PIÈCE À USINER, ET MACHINE-OUTIL À PLAT

(30) Priorität: 19.11.2019 DE 102019131235
(43) Veröffentlichungstag der Anmeldung: 28.09.2022
(73) Patentinhaber: TRUMPF Werkzeugmaschinen SE + Co. KG, 71254 Ditzingen (DE)
(72) Erfinder: OTTNAD, Jens, 76199 Karlsruhe (DE); KIEFER, Manuel, 74889 Sinsheim (DE); WEISS, Korbinian, 70825 Korntal (DE); PÖNITZ, Willi, 71229 Leonberg (DE); TESCHNER, Marc, 70176 Stuttgart (DE); GEBHARD, Daniel, 75031 Eppingen (DE)
(74) Vertreter: Trumpf Patentabteilung
(86) Internationale Anmeldenummer: PCT/EP2020/081149
(87) Internationale Veröffentlichungsnummer: WO 2021/099138

(56) Entgegenhaltungen:
- DE-A1- 102017 004 926
- DE-A1- 102017 107 357
- US-A1- 2018 319 024
- US-A1- 2018 349 373

## Beschreibung

Die vorliegende Erfindung betrifft Verfahren zum Verknüpfen von Information mit einem Werkstückdatensatz eines Werkstücks einer in einer Auflageebene eines Sortiertischs liegenden Anordnung von Werkstücken, insbesondere zum Integrieren eines manuellen Absortiervorgangs in den Betrieb von Flachbettwerkzeugmaschinen. Ferner betrifft die Erfindung entsprechend ausgebildete Flachbettwerkzeugmaschinen.

Beim Absortieren von Teilen an Werkzeugmaschinen, insbesondere von Laserschnittgut oder gestanzten Werkstücken wie Blechteilen, vergleicht üblicherweise ein Bediener visuell jedes einzelne geschnittene Teil mit einer Auftragszeichnung des jeweiligen Teils. Fehlerhaft geschnittene oder gestanzte Blechteile werden als Ausschuss gekennzeichnet und aussortiert. Wenn ein Bediener z.B. ein Ausschussteil auf dem Sortiertisch erkennt, kann er eine entsprechende Verbuchung an einem Bedienerterminal durchführen. Hierzu muss er jedoch zum Ort des Bedienerterminal wechseln. Alternativ könnte der Bediener mehrere/alle Korrekturbuchungen gesammelt durchführen. Eine Mehrfachbuchung ist jedoch fehleranfällig.

Ein Verfahren zur Unterstützung eines Bedieners bei einem Absortiervorgang von auf einem Sortiertisch angeordneten Werkstücken, auch Teilevereinzelung genannt, ist in der WO 2018/073420 A1 der Anmelderin beschrieben, wobei insbesondere Ortungssysteme zur Lokalisierung der Hand des Bedieners eingesetzt werden.

Ein Verfahren zur automatischen Prozesskontrolle ist aus DE 102 15 885 A1 bekannt. Ferner sind intelligente Handschuhe für den industriellen Einsatz, insbesondere zur Unterstützung von Arbeitsabläufen bei der industriellen Fertigung, zum Beispiel aus DE 10 2015 111 506 A1 und DE 10 2011 002 952 A1 bekannt.

Aus der DE 10 2017 107 357 A1 ist ein Absortierunterstützungsverfahren an einer Flachbettmaschine bekannt.

Aus der DE 10 2017 004 926 A1 ist eine Berührungsbedienung für eine Verarbeitungsmaschine bekannt.

Aus der US 2018/0319024 A1 ist eine Gestensteuerung eines Roboters bekannt.

Aus der US 2018/0349373 A1 ist eine Gestensteuerung eines Industrieprozesses bekannt. Einem Aspekt dieser Offenbarung liegt die Aufgabe zugrunde, Laufwege zwischen Sortiertisch und Bedienerterminal, insbesondere beim Verbuchen von Ausschussteilen, zu reduzieren und Fehler zu vermeiden. Eine weitere Aufgabe liegt darin, die Zuordnung von Information zu Datensätzen von erzeugten Werkstücken zu erleichtern und/oder Fehler bei der Zuordnung von Information zur reduzieren.

Zumindest eine dieser Aufgaben wird gelöst durch ein Verfahren zum Verknüpfen von Information mit einem Werkstückdatensatz eines Werkstücks einer in einer Auflageebene eines Sortiertischs liegenden Anordnung von Werkstücken nach Anspruch 1 und durch eine Flachbettwerkzeugmaschine nach Anspruch 13. Weiterbildungen sind in den Unteransprüchen angegeben.

Ein Aspekt dieser Erfindung bezieht sich auf ein Verfahren zum Gesten-basierten Verbuchen eines werkstückspezifischen Absortiervorgangs von auf einem Sortiertisch angeordneten Werkstücken, die mit einer Flachbettwerkzeugmaschine, insbesondere einer Laserschneid- oder Stanz-Flachbettwerkzeugmaschine, gemäß einem Bearbeitungsplan erzeugt wurden. Das Verfahren umfasst die Schritte:
Erfassen einer Selektionsgeste eines Bedieners zur Identifikation eines der angeordneten Werkstücke, wobei die Selektionsgeste in räumlichen Bezug zum zu identifizierenden Werkstück steht, und
Erfassen einer Verbuchungsgeste für das identifizierte Werkstück.

In einem weiteren Aspekt ist ein Verfahren zum Verknüpfen von Information mit einem Werkstückdatensatz eines Werkstücks einer in einer Auflageebene eines Sortiertischs liegenden Anordnung von Werkstücken offenbart. Die Werkstücke wurden mit einer Flachbettwerkzeugmaschine, insbesondere einer Laserschneid- oder Stanz-Flachbettwerkzeugmaschine, gemäß einem in einer Steuerungseinheit der Flachbettwerkzeugmaschine abgelegten Bearbeitungsplan aus einem plattenförmigen Material erzeugt. Der Bearbeitungsplan umfasst Werkstückdatensätze, in denen Lagen und Konturen der Werkstücke in der Anordnung von Werkstücken abgelegt sind. Das Verfahren weist die folgenden Schritte auf:
Erfassen eines Selektionszeitpunkts durch eine in räumlichen Bezug zu einem zu selektierenden Werkstück stehende erste Aktion eines Bedieners,
Bestimmen einer Position einer Hand des Bedieners im Raum über der Anordnung von Werkstücken mit einem Ortungssystem zum Selektionszeitpunkt,
Ableiten einer Selektionsposition in der Auflageebene aus der bestimmten Position der Hand,
Auswählen eines Werkstückdatensatzes aus den Werkstückdatensätzen durch Abgleichen der Selektionsposition mit den Lagen und Konturen der Werkstücke als einen durch die erste Aktion selektierten Werkstückdatensatz,
Erfassen einer zweiten Aktion, bei der der Bediener eine Gestenbewegung ausführt, wobei der Gestenbewegung in einer Datenbank eine zu verbuchende Information zugeordnet ist,
Auslesen der zu verbuchenden Information aus der Datenbank und
Verknüpfen der zu verbuchenden Information mit dem selektierten Werkstückdatensatz.

In einem weiteren Aspekt umfasst eine Flachbettwerkzeugmaschine, insbesondere Laserschneid- oder Stanz-Flachbettwerkzeugmaschine, eine Bearbeitungseinheit, insbesondere einer Laserschneid- oder Stanz-Bearbeitungseinheit, und eine Steuerungseinheit, in der ein Bearbeitungsplan abgelegt ist, zur Ansteuerung der Bearbeitungseinheit zur Erzeugung von räumlich nebeneinander angeordneten Werkstücken. Ferner umfasst die Flachbettwerkzeugmaschine einen Sortiertisch zum Bereitstellen der erzeugten und in einer Auflageebene nebeneinander angeordneten Werkstücke zum Absortieren durch einen Bediener und ein Ortungssystem zum Bestimmen einer Position einer Hand des Bedieners im Raum. Die Steuerungseinheit istzum Durchführen der hierin offenbarten Verfahren ausgebildet.

In einigen Ausführungsformen kann die erste Aktion eine Selektionsgestenbewegung sein, die der Bediener mit der Hand über der Anordnung von Werkstücken ausführt und die mit einem an der Hand getragenen Beschleunigungssensor oder mit dem Ortungssystem erfasst wird. Beispielsweise kann die Selektionsgestenbewegung eine Tippbewegung auf das zu selektierende Werkstück sein. Die Tippbewegung kann optional mit dem Ortungssystem erfasst werden und als Positionsdaten von aufgereihten Positionen der Hand ausgegeben werden. Dabei kann eine Position in der Auflageebene, die in Verlängerung der aufgereihten Positionen liegt, als die Selektionsposition abgeleitet werden.

In einigen Ausführungsformen kann der Bediener eine Selektionsunterstützungseinheit, insbesondere einen Handschuh, ein Armband oder einen Eingabestift, handnah zur Bestimmung der Position der Hand des Bedieners tragen. Die Selektionsunterstützungseinheit kann optional einen Beschleunigungssensor und/oder einen aktiven Sender eines Ortungssystems und/oder einen passiven Sender eines Ortungssystems aufweisen und/oder als Teil des Ortungssystems ausgebildet sein.

In einigen Ausführungsformen kann das Ortungssystems zur Bestimmung der Position der Hand des Bedieners eine Position eines in der Hand gehaltenen Eingabestifts erfassen. Die erste Aktion kann ein Auftippen des Eingabestifts auf das zu selektierende Werkstück umfassen und es können Positionsdaten einer Spitze des Eingabestifts in oder nahe der Auflageebene als Selektionsposition abgeleitet werden. Der Eingabestift kann einen drucksensitiven Drucksensor, insbesondere in einer Spitze des Eingabestifts, aufweisen und ferner dazu ausgebildet sein, bei Aktivierung des Drucksensors ein Triggersignal auszugeben. Die erste Aktion kann ein Aufdrücken des Eingabestifts auf das zu selektierende Werkstück zur Aktivierung des Drucksensors und Ausgabe eines Triggersignals durch den Eingabestift umfassen. Das Verfahren kann dann ferner die folgenden Schritte umfassen: Erfassen des Triggersignals und Bestimmen des Selektionszeitpunkts als den Zeitpunkt des Erfassens des Triggersignals; und Beschränken der mit dem Ortungssystem erfassten Positionen der Hand auf den Selektionszeitpunkt oder auf ein Zeitfenster um den Selektionszeitpunkt.

In einigen Ausführungsformen kann das Ortungssystem dazu ausgebildet sein, Bilddaten von einer oder von mehreren Kameras zur bildunterstützen Bestimmung der Position der Hand des Bedieners auszuwerten. Alternativ kann das Ortungssystem auf einer ultra-wideband Ortung einer handnah getragenen mobile Einheit basieren und das Bestimmen einer Position einer Hand des Bedieners, insbesondere einer Gestenbewegung, im Raum kann durch Auswerten der mit dem Ortungssystem (unter Verwendung des Ortungssystems) gewonnenen Positionsdaten der mobilen Einheit durchgeführt werden.

In einigen Weiterbildungen des Verfahrens kann das Abgleichen der Selektionsposition mit den Lagen und Konturen der Werkstücke die folgenden Schritte umfassen:
Erfassen der Lage der Anordnung von Werkstücken in der Auflageebene mit einer Kamera,
Erzeugen transformierter Daten der Lagen und Konturen der Werkstücke durch Transformieren der Lagen und Konturen der Werkstücke in die Auflageebene basierend auf der erfassten Lage der Anordnung von Werkstücken und
Abgleichen der Selektionsposition mit den transformierten Daten der Lagen und Konturen der Werkstücke.

Erfindungsgemäß werden für eine Mehrzahl von aufeinanderfolgend erfassten ersten Aktionen eine Mehrzahl von Selektionspositionen abgeleitet, zu denen eine Mehrzahl von selektierten Werkstückdatensätzen ausgewählt wird. Die Mehrzahl von selektierten Werkstückdatensätzen werden durch Erfassen der zweiten Aktion einheitlich mit der zu verbuchenden Information verknüpft.

In einigen Ausführungsformen kann die zu verbuchende Information eine Klassifizierung als Ausschussteil umfassen und das Verfahren, ferner den Schritt umfassen den selektierten Werkstückdatensatz in eine Ausschussliste aufzunehmen.

In einigen Weiterbildungen kann das Verfahren ferner als Verfahrensschritt ein Anzeigen von werkstückspezifischer Information zu dem durch die erste Aktion selektierten Werkstückdatensatz auf einer Anzeigeeinheit umfassen. Die werkstückspezifische Information kann optional Kundendaten, Informationen zum nachfolgenden Prozessschritt, eine Anzahl weiterer gleicher Teile, eine zugeordnete Werkstücksammelstelle oder eine Auftragsnummer für das zum selektierten Werkstückdatensatz gehörende Werkstück umfassen. Ferner kann das Verfahren optional ein Erweitern der angezeigten werkstückspezifischen Information um die mit dem selektierten Werkstückdatensatz verknüpfte, zu verbuchende Information umfassen.

In einigen Weiterbildungen kann das Verfahren ferner als Verfahrensschritt ein Ausgeben einer Rückmeldung an den Bediener nach erfolgter Verknüpfung umfassen. Die Rückmeldung kann optional durch einen Vibrationsfeedback, ein visuelles Feedback oder ein akustisches Feedback erfolgen.

In einigen Weiterbildungen der Flachbettwerkzeugmaschine umfasst diese ferner einen der Hand getragenen Beschleunigungssensor und/oder einen Eingabestift zur Erleichterung der Ortung. Der Eingabestift kann optional als drucksensitiver Eingabestift mit einem Drucksensor ausgebildet werden, der bei Aufdrücken des Eingabestifts auf ein Werkstück ein Triggersignal zum Beschränken der mit dem Ortungssystem erfassten Positionen der Hand für das Erfassen einer Gestenbewegung auf ein Zeitfenster um das Erfassen des Triggersignals veranlasst. Alternativ oder zusätzlich kann der Eingabestift optional einen aktiven Sender und/oder einen passiven Sender aufweisen, dessen Position vom Ortungssystem als Position der Hand des Bedieners erfassbar ist.

Allgemein kann das Ortungssystem mindestens eine Antenne zum Empfangen von Signalen einer nahe der Hand getragenen Selektionsunterstützungseinheit umfassen. Alternativ oder zusätzlich kann das Ortungssystem eine oder mehrere Kameras zur Bilderfassung der Position der Hand des Bedieners und/oder einer Selektionsunterstützungseinheit aufweisen.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z.T. erhebliche Zeitansparung bei der Zuordnung von Ausschussteilen bewirken.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung eines Ausschnitts einer intelligenten Fabrik mit einer Laserschneid- oder Stanz-Flachbettwerkzeugmaschine,
- Fig. 2: eine schematische Darstellung zur beispielhaften Verdeutlichung einer Selektion von Ausschusswerkstücken an einem Absortiertisch einer Flachbettwerkzeugmaschine,
- Fig. 3: eine schematische Darstellung einer beispielhaften Schachtelung von Werkstücken, wie sie einem Bearbeitungsplan für eine Flachbettwerkzeugmaschine zugrunde liegen kann,
- Fig. 4: eine schematische Darstellung eines Kamerabilds einer Aufsicht auf eine Palette während einer Tippbewegung auf ein Werkstück einer Anordnung von Werkstücken, wie sie gemäß des in Fig. 3 dargestellten Bearbeitungsplans ausgeschnitten wurden und zur Vereinzelung bereitstehen, und
- Fig. 5: ein Flussdiagramm zur Verdeutlichung eines beispielhaften Verfahrensablaufs zum Verknüpfen von Information mit einem Werkstückdatensatz.

Hierin beschriebene Aspekte basieren zum Teil auf der Erkenntnis, dass spezifische Aktionen wie eine Gestensteuerung im Rahmen eines Absortiervorgangs von Schnittgut, das mit Laserschneid- (oder Stanz-) Flachbettwerkzeugmaschinen gemäß einem Bearbeitungsplan erzeugt wurde, den Sortiervorgang vereinfachen können. Dabei wird insbesondere vorgeschlagen, eine erste Aktion des Bedieners zu nutzen, um einen kontinuierlich erfolgenden Ortungsprozess einer Hand des Bedieners für eine Selektion eines Werkstücks auszuwerten. Die Selektion wird dazu benötigt, dass eine spezifische Information digital mit einem oder mit mehreren selektierten Werkstücken verknüpft werden kann, beispielsweise indem die Information mit einem entsprechenden Werkstückdatensatz abgespeichert wird. Beispielsweise kann ein Werkstück mit werkstückspezifischer Prozessinformationen wie Fehlschnitte oder Ausschuss verknüpft werden. Ferner kann ein Werkstück mit Informationen, die von einem Bediener erstellt wurden, verknüpft werden, beispielsweise mit Informationen zur Qualität, die durch manuelles Messen oder eine Sichtkontrolle der Werkstücke gewonnen werden. Die Eingabe dieser manuell erfassten Informationen kann über eine gestengesteuerte Eingabe erfolgen.

Für die hierzu notwendige Ortung der Hand des Bedieners wird vorgeschlagen, eine Flachbettwerkzeugmaschine, insbesondere einen Sortiertisch, mit einem Ortungssystem auszustatten. Das Ortungssystem kann beispielsweise ein ultra-wideband (UWB)-Ortungssystem oder ein bildbasiertes Ortungssystem sein. Ferner können auch Beschleunigungssensoren z.B. in einem Armband oder in einer Smart-Watch genutzt werden, um Bewegungen und Aktionen des Bedieners zu erfassen.

Ein UWB-Ortungssystem umfasst z.B. mehrere stationäre Einheiten ("Anchors") und mindestens eine mobile Einheit an der Hand des Bedieners (z.B. ein "Tag" oder Positionssensor) und gewinnt Positionsdaten der mobilen Einheit durch Austausch von UWB-Signalen. Ein Tag kann beispielsweise mit einem Datenhandschuh oder einem anderen sich am Bediener befindenden Medium wie ein Ring, ein Armband, eine Uhr (Smartwatch) oder ein Fingerhut (allgemein auch als Wearables bezeichnet) handnah getragen werden. Dabei können Beschleunigungssensoren integriert werden, die z.B. in den Tags vorgesehen und zur Interaktion über eine Erfassung von Bewegungen geeignet sind. Ein beispielhaftes UWB-Ortungssystem ist in der PCT-Anmeldung PCT/FR2019/000057 der BeSpoon SAS mit dem Titel "ULTRA-WIDEBAND LOCATION SYSTEMS AND METHODS", eingereicht am 19. April 2019 beschreiben.

Ein bildbasiertes Ortungssystem kann eine oder mehrere fest installierte Kameras zur Gewinnung von Bilddaten des Sortiertischs mit den aufliegenden Werkstücken umfassen. Auch die Bilderkennung/Bildverarbeitung kann durch ein optisch auffälliges Wearable oder durch ein in der Hand gehaltenes Element wie ein Eingabestift (hierin als Selektionsunterstützungseinheit bezeichnet) verbessert werden. Bilddaten können ergänzend oder alternativ mit einer Datenbrille, die vom Bediener getragen wird, erfasst werden. So kann eine Datenbrille mittels einer darin enthaltenen Kamera über den Weg der Bildverarbeitung grundsätzlich ein Tracking der Hand im Raum ermöglichen. In den Sichtbereich der Datenbrille kann zusätzlich zum real erfassten Bild der Umgebung Information bzgl. eines z.B. selektierten Werkstücks eingeblendet werden.

Durch die Auswertung von Kamerabildern und/oder der Positionsdaten der mobilen Einheit kann somit die Position und insbesondere auch die Bewegung der Hand des Bedieners erfasst werden.

Entscheidend für die richtige Zuordnung von Information zu einem Werkstückdatensatz ist die richtige Selektion des Werkstücks. Erfindungsgemäß wird dies durch eine spezifisch ausgeführte Aktion des Bedieners möglich.

Mit anderen Worten erlauben es die hierin beschriebenen Konzepte, ein zugrundeliegendes Fertigungssteuerungssystem über spezifische Aktionen zu steuern. Z.B. kann eine Geste als eine "erste Aktion" von einem Bediener während des Absortierens ausgeführt werden. Hierzu kann ein Greifvorgang eines zu selektierenden Werkstücks von einer spezifischen Gestenbewegung wie ein wiederholtes Absenken der Hand (Tippen) oder ein Fingerzeig als "erste Aktion" begleitet werden. Alternativ oder ergänzend zu einer Gesten-basierten ersten Aktion ist der Einsatz eines Fußschalters oder eines Schaltsensors am Finger, an der Hand oder am Arm sowie eine Sprachsteuerung möglich.

Wird eine derartige erste Aktion erfasst, bestimmt dies den Zeitpunkt (hierin auch Selektionszeitpunkt genannt), für den das Ortungssystem die Position der Hand (hierin auch Selektionsposition zum Selektionszeitpunkt genannt) ableiten und ausgeben soll. Anhand der Selektionsposition wird dann unter Kenntnis der Lagen der Werkstücke das zu selektierende Werkstück bestimmt; beispielsweise wird das mit dem Greifvorgang aufgenommene Werkstück durch das vorausgehende Auftippen selektiert.

Die hierin beschriebenen Konzepte nutzen ferner eine Zuordnung von definierten Gesten zu spezifischen Informationen. So kann, wenn der Bediener in einer zweiten Aktion eine der definierten Gesten durchführt, diese erfasst werden und die der Geste zugeordnete Information mit den Werkstückdaten des selektierten Werkstücks verknüpft werden.

Das erfindungsgemäße Vorgehen wird nachfolgend unter Bezugnahme auf die Figuren beispielhaft erläutert.

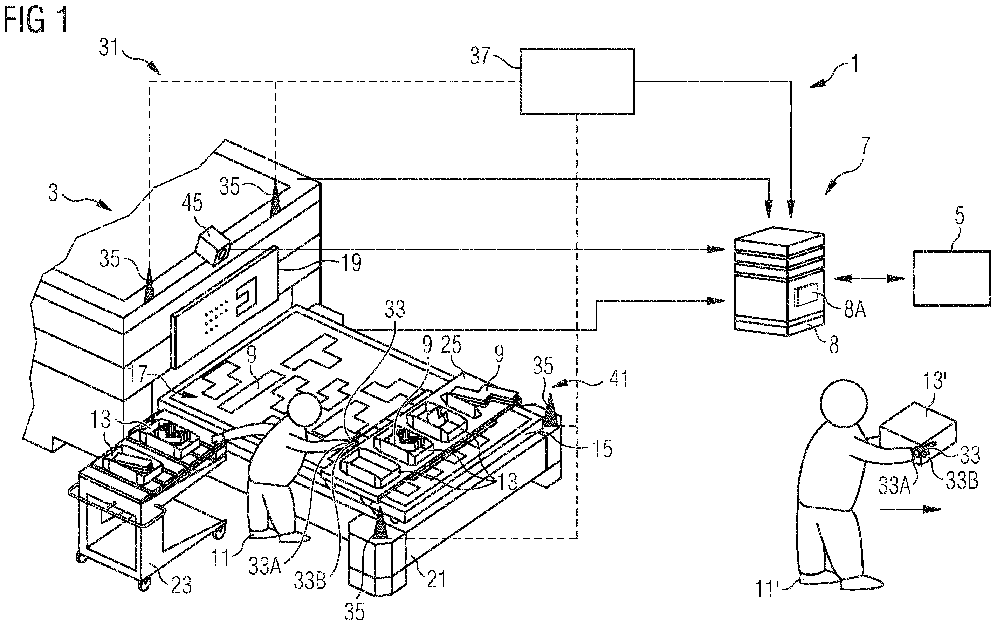

Fig. 1 zeigt eine Übersicht einer intelligenten Fabrik 1 ("smart factory"), die Produktionsressourcen, wie eine beispielhaft dargestellte Laserschneid- oder Stanz-Flachbettwerkzeugmaschine 3, und ein Fertigungssteuerungssystem (manufacturing execution system MES) 5 umfasst. Allgemein kann eine Flachbettwerkzeugmaschine eine Laserschneid- oder Stanz-Flachbettwerkzeugmaschine sein, die nur mittels Laser oder nur mittels Stanzen trennt. Ferner kann eine Flachbettwerkzeugmaschine eine Kombinationsmaschine sein, die beide Trennverfahren umsetzt. Auf der Flachbettwerkzeugmaschine können auch weitere Verarbeitungsschritte wie z.B. Entgraten, Biegen, Falzen, Schweißen, Bohren, Gewindeschneiden, etc. ausgeführt werden. Bei derartigen Laserschneid- oder Stanz-Flachbettwerkzeugmaschinen ist ein Bearbeitungsplan (z.B. Schneidplan) in der Maschinensteuerung hinterlegt. Im Bearbeitungsplankönnen die Lagen und Konturen der zu erzeugenden Werkstücke maschinenlesbar festgehalten werden.

Über ein Netzwerk 7 laufen die virtuellen und physischen Produktionselemente und Produktionsschritte, insbesondere die Informationen über Werkstücke 9 (erforderliche Anzahl, Form, Material, Typ...), im MES 5 zusammen. Eine Steuerungseinheit 8, wie ein PC, Rechenknoten oder ähnliche geeignete Hardware, dient der Ansteuerung z.B. der Flachbettwerkzeugmaschine 3. Die Steuerungseinheit kann als Teil des MES 5 oder lokal bei der Flachbettwerkzeugmaschine 3 als eigene Einheit ausgebildet werden. Die Steuerungseinheit 8 ist insbesondere dazu eingerichtet, während eines Echtzeit-Betriebs der intelligenten Fabrik 1 das Absortieren der Werkstücke 9 sowie das Aussortieren von Fehlteilen durch einen Bediener 11 auf z.B. Werkstücksammelstellen 13 zu unterstützen. Hierzu weist das zugrundeliegende Rechensystem beispielsweise digitale Prozessorsysteme mit Dateneingänge und Steuerungsausgänge aufweisenden Mikroprozessorkreisen sowie Datenbänke 8A auf, die gemäß computerlesbaren, auf einem computerlesbaren Medium gespeicherten, Anweisungen betrieben werden. Die Steuerungseinheit (das MES 5) stellt eine hohe Rechenleistung für die Echtzeitunterstützung bereit. Sie weist ferner einen Langzeit- (nicht volatilen) Speicher zum Speichern der Programmanweisungen als auch einen sehr schnellen Kurzzeit- (volatilen) Speicher zum Speichern von erfassten Daten und der gemäß dem Verfahren erzeugten Verknüpfung des selektierten Werkstückdatensatzes und der Information auf.

Die Werkstücke 9 werden von der Flachbettwerkzeugmaschine 3 auf einer Palette 15 liegend als Tafel 17 ausgegeben. Die Palette 15 bildet einen Sortiertisch 21 für die Teilevereinzelung. Der Bediener 11 entnimmt die Werkstücke aus dem Restgitter und sortiert sie den Werkstücksammelstelleneinheiten 13 für die jeweilige Weiterbearbeitung zu oder klassifiziert sie als Ausschuss. Mit den hierin vorgeschlagenen Verfahren können im Rahmen des Absortiervorgangs relevante Information mit einem Werkstückdatensatz eines Werkstücks verknüpft werden.

Auf einer Anzeige 19 kann dem Bediener während des Absortierens der Werkstücke 9 abgespeicherte und insbesondere auch die neu verknüpfte Information werkstückspezifisch angezeigt werden.

In Fig. 1 sind ferner ein Wagen 23 und eine über dem Sortiertisch 21 verfahrbare Brücke 25 mit mehreren Werkstücksammelstelleneinheiten 13 dargestellt. Nach Ablegen einer benötigten Anzahl von absortierten Werkstücken in eine Werkstücksammelstelleneinheit 13' wird diese beispielsweise von einem Bediener 11' (oder automatisiert von einem Robotersystem) zu einem nachfolgenden Bearbeitungsschritt gebracht. Ausschussteile können ebenfalls gesammelt werden oder sie verbleiben im Restgitter. Entscheidend ist für eine digitalisierte Auftragsbegleitung, dass das MES 5 entsprechend informiert wird. Mit anderen Worten ist es wünschenswert, dass für die korrekt sowie fehlerhaft erzeugten Werkstücke entsprechende Informationen mit den Werkstückdatensätzen verknüpft und im MES 5 hinterlegt werden.

Um die benötigte Position der entnehmenden Hand erfassen zu können wird im Bereich des Arbeitsplatzes ein Ortungssystem 31 vorgesehen, das die Ortung einer Hand des Bedieners, optional auch einer Selektionsunterstützungseinheit 33, erlaubt. Die Selektionsunterstützungseinheit 33 befindet sich nahe der Hand/des Arms des Bedieners 11. In Fig. 1 wird sie beispielhaft als Handschuh vom Bediener 11 getragen. Die Selektionsunterstützungseinheit 33 ist beispielsweise eine mobile Einheit 33B in Form eines Radio Frequency Identification (RFID) Senders, dessen IST-Position in Echtzeit erkannt werden kann. Peiltranspondersysteme arbeiten z.B. im Bereich von 2,45 GHz mit einer Ortsauflösung von wenigen Zentimetern. Allgemein kann die Selektionsunterstützungseinheit 33 einen aktiven Sender und/oder einen passiven Sender eines Ortungssystems tragen.

Wie in Fig. 1 beispielhaft gezeigt wird, weist das Ortungssystem 31 vier Antennen 35 auf, die ortsnah am Sortiertisch 21 vorgesehen sind. Über die Antennen 35 erfasste Funkwellen werden als Daten an einen Positionsberechnungsabschnitt 37 des Ortungssystems 31 geleitet, der z.B. aus den unterschiedlichen Signallaufzeiten die Position der Selektionsunterstützungseinheit 33 bestimmt und optional eine Bewegungstrajektorie ableitet. Die Position kann ferner als Position der Hand definiert werden, zu der eine Position in einer Auflageebene 41 der Palette 15 abgeleitet werden kann (beispielsweise durch Projektion der Position der Hand in die Auflageebene 41).

Mittels der im Bearbeitungsplan abgelegten Daten zur Werkstückerzeugung kann die Lage der zur Entnahme anstehenden Teile ebenfalls im Koordinatensystem der Ablageebene 41 gewonnen werden. Wie bereits angesprochen kann über die Position der Selektionsunterstützungseinheit 33 abgeleitet werden, über welchem Werkstück 9 sich die Hand befindet.

Die Selektionsunterstützungseinheit 33 kann ferner einen oder mehrere Sensoren (z.B. einen Beschleunigungssensor 33A) aufweisen, die für die Detektion von Gesten ausgebildet sind. Die Erkennung von spezifischen Gesten kann ferner alternativ oder ergänzend durch eine Umgebungskamera 45, die oberhalb des Sortiertischs 21 angebracht ist, und/oder das Ortungssystem 31 unterstützt werden. Zur Übermittlung von Sensordaten kann die Selektionsunterstützungseinheit eine drahtlos an das MES 5 angebunden sein. Die erfassten Gesten können im MES 3 spezifische Prozesse auslösen.

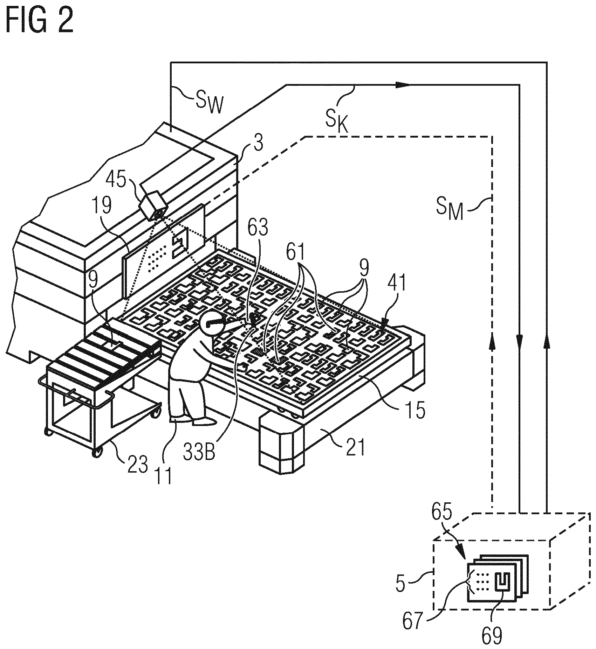

Fig. 2 zeigt eine beispielhafte gemeinsame Selektion von mehreren Werkstücken 61 als Ausschussteile. Wie in Fig. 1 hat die Flachbettwerkzeugmaschine 3 Werkstücke 9 auf einer Palette 15 in einer Ablageebene 41 liegend ausgegeben. Fig. 2 verdeutlicht hierzu schematisch, wie die Maschinensteuerung/das MES 5 die Flachbettwerkzeugmaschine 3 ansteuert, um einen Bearbeitungsprozess gemäß einem Bearbeitungsplan 65 durchzuführen und Werkstücke 9 zu erzeugen.

Der Bearbeitungsplan 65 ist in der Maschinensteuerung maschinenlesbar abgelegt. Z.B. stellt der Bearbeitungsplan 65 geometrische Konturen und Lagen (Bezugspunkte) der Werkstücke in Werkstückpositionsdatensätzen 67 bereit. Die Werkstückpositionsdatensätze 67 definieren zusammen eine Anordnung von Werkstücken (Schachtelungsanordnung) in einer Ebene, d.h. die relative Lage der Werkstücke zueinander. Die Schachtelungsanordnung sowie die Werkstückpositionsdaten der zu erzeugenden Werkstücke können sowohl für die Fertigung in Tafelkoordinaten einer "geplanten zu bearbeitenden Materialtafel" (allgemein eines plattenförmigen Materials) als auch zum Absortieren nach der Erzeugung in Koordinaten der Auflageebene 41 der Palette 15 übertragen werden.

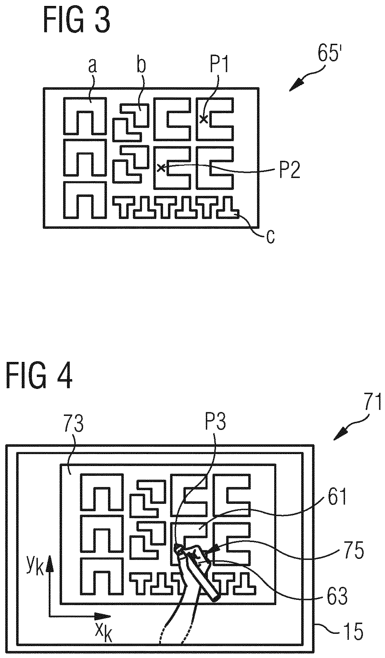

Fig. 3 zeigt einen schematischen Bearbeitungsplan 65' zur Erzeugung einer Anordnung von Werkstücken. Beispielhaft sind drei Typen von Werkstücken a, b, c sowie Bezugspunkte P1, P2 (z.B. Flächenschwerpunkte oder Einstichpunkte) angedeutet. Die Bezugspunkte P1, P2 können Werkstückpositionsdaten als Koordinaten eines Referenzpunkts eines Werkstücks in einer Bezugsebene darstellen. Ferner können Werkstückpositionsdaten eine Form eines Werkstücks (z.B. die durch den Schneidweg gegebene Außenkontur) umfassen.

Wieder bezugnehmend auf Fig. 2 umfasst der Bearbeitungsplan 65 ferner Werkstückinformationen zu den herzustellenden Werkstücken 9. Die Werkstückinformation kann auftragsspezifische Informationen (Auftragskenndaten) zu den einzelnen Werkstücken umfassen, wie zum Beispiel eine Auftragsnummer, eine benötigte Anzahlen der verschiedenen Typen von Werkstücken und eventuell weitere nachfolgende Bearbeitungsschritte für die Werkstücke. Ergänzend kann die Werkstückinformation im Bearbeitungsplan Werkstück-Bilddaten 69 der zu fertigenden Werkstücke (z.B. digitale Ansichten oder technische Zeichnungen) umfassen sowie eine aus den Werkstück-Bilddaten erzeugte digitale Ansicht der Schachtelungsanordnung.

Für die Fertigung wird der Bearbeitungsplan in Maschinenkoordinaten der Flachbettwerkzeugmaschine 3 transformiert. Die Werkzeugmaschinensteuerung 5 kann z.B. die Bewegung eines Laserschneidkopfs über die Materialtafel entlang den Konturen der geplanten Werkstücke an den geplanten Lagen innerhalb der Anordnung von Werkstücken ansteuern sowie die Laserschneidparameter einstellen. Für die Durchführung eines Bearbeitungsprozesses gibt die Werkzeugmaschinensteuerung 5 ein Ansteuerungssignal Sw an die Bearbeitungseinheit 3 aus.

In Fig. 2 liegen nach der Bearbeitung die geschnittenen Werkstücke 9 in der übergeordneten Form der ursprünglichen Materialtafel als "Schnittgut" auf der Palette 15 vor und sind entsprechend plattenförmig zueinander in der Auflageebene 41 angeordnet. Die Werkstücke 9 sind von einem sogenannten Restgitter, d. h. dem Material der Tafel, das nicht für Werkstücke 9 genutzt werden konnte, umgeben. Die Werkstücke 9 können über sogenannte Mikrojoints noch mit dem Restgitter lösbar verbunden sein.

Zurückkommend auf die Selektion von Ausschussteilen identifiziert der Bediener 11 über eine Geste in Form einer Auftippbewegung mit einem Eingabestift 63 nacheinander mehrere Werkstücke als Ausschuss. D.h., der Bediener tippt auf jedes als Ausschussteil erkannte Werkstück 61. Im Beispiel der Fig. 2 erfasst das Ortungssystem 31 die Position der Selektionsunterstützungseinheit (hier die Spitze des Eingabestifts 63) als Position der Hand (durch Bildverarbeitung oder eine mobile Einheit 33A eines UWB-Ortungssystems). Jede Auftippbewegung definiert einen Selektionszeitpunkt für ein "zugeordnetes" Werkstück. Um die Position der Selektionsunterstützungseinheit und damit der Hand über dem z.B. geschnittenen Blech auf der Palette bestimmen zu können, ist das Ortungssystem 31, hier die Bilder der Kamera 45, auf das Koordinatensystem des Sortiertischs kalibriert. Zu den verschiedenen Selektionszeitpunkten werden Selektionspositionen in der Auflageebene 41 abgeleitet und die entsprechenden Werkstücke gemeinsam erfasst. Beispielsweise können Positionsdaten der Spitze des Eingabestifts 63 in oder nahe der Auflageebene 41 als Selektionsposition abgeleitet werden.

Die Auftippbewegung kann beispielsweise mit einem Kamerasystem zur Erfassung von zweidimensionalen oder dreidimensionalen Aufnahmen eines Sortiertischs mit den Werkstücken 9 erkannt werden. Für mehrdimensionale Aufnahmen können auch mehrere Kameras eingesetzt werden oder es können Aufnahmen von mehreren Kameras zu einem zweidimensionalen Bild zusammengesetzt werden. In Fig. 2 ist die Kamera 45 beispielhaft zentral bezüglich der Palette 15 an der Werkzeugmaschine 3 angebracht und zur Aufnahme der Palette 15/des Sortiertischs auf diese ausgerichtet. Die Tippbewegung kann als Positionsdaten von aufgereihten Positionen des Eingabestifts 63 (oder auch eines Fingers, allgemein der Hand) ausgegeben werden, die entsprechend als Geste bewertet werden. Die aufgereihten Positionen können zugleich zur Bestimmung der Selektionsposition in der Auflageebene 41 verwendet werden. Die Selektionsposition kann z.B. als in Verlängerung der aufgereihten Positionen liegend abgeleitet werden.

Für die hierin offenbarten Konzepte kann beispielsweise ein Kamerasystem zur Bilderfassung eingesetzt werden, wie es in der eingangs erwähnten WO 2018/073419 A1 für eine Unterstützung beim Absortieren von Werkstücken oder in der noch nicht veröffentlichten deutschen Patentanmeldung DE 10 2018 133 524.5 mit Anmeldetag 21. Dezember 2018 der Anmelderin hinsichtlich der Verarbeitung von Restgittern beschrieben wird.

Fig. 4 zeigt ein Bild 71 der Palette 15, auf der eine Materialtafel 73 liegt, die gemäß dem in Fig. 3 gezeigten Bearbeitungsplan 65' bearbeitet wurde. Zusätzlich zu den angedeuteten Werkstücken erkennt man eine Hand 75 des Bedieners 11, die mit einem Eingabestift 63 ein Werkstück 61 berührt bzw. auf dieses tippt. Ferner ist in das Bild 71 ein Bildkoordinatensystem (X_{K}, Y_{K}) und ein Bezugspunkt P3 der Hand 75 (als Beispiel für Handpositionsdaten hier die Spitze des Eingabestifts 63) eingezeichnet.

Beispielsweise können Handpositionsdaten als Koordinaten eines Referenzpunkt der erkannten Hand und/oder ein Ausmaß der erkannten Hand/des erkannten Eingabestifts in einer Ebene parallel zur Materialtafel umfassen. In Fig. 4 wird als Bezugspunkt P3 die Spitze des Eingabestifts 63 aus den Bilddaten berechnet. Alternativ kann der Bezugspunkt die Position einer Markierung an einem an der Hand getragenen Handschuh (siehe Fig. 1), an einem am Handgelenk getragenen Armband oder an einem anderen Wearable sein.

Wie in Fig. 2 mit einer (Kamera-) Signalverbindung S_{K} angedeutet sendet die Kamera 45 Bilddaten des Bilds 71 an die Maschinensteuerung/MES 5, in der ein Bildverarbeitungsalgorithmus durchgeführt wird, um die Position der Hand zu tracken und optional Gesten zu erfassen. Mithilfe einer (räumlich kalibrierten) Aufnahme der Kamera 45 der ausgegebenen Materialtafel (des Schnittguts im Restgitter) können die Werkstückpositionsdaten 67 der gemäß dem Bearbeitungsplan 65 erzeugten Werkstücke 9 in ein Koordinatensystem des Ortungssystems 31 transformiert werden.

Im Anschluss an die Selektion der Werkstücke wird nun mithilfe einer Gestenbewegung die zu verbuchende Information, die der Gestenbewegung in einer Datenbank zugeordnet ist, ausgewählt. Beispielsweise kann für die erfassten Werkstücke eine Geste, die für Ausschussteil steht, durchgeführt werden, sodass die Werkstückdatensätze der selektierten Werkstücke mit der Information "Ausschuss" verknüpft werden. Beispielsweise kann die zu verbuchende Information eine Klassifizierung als Ausschussteil darstellen und optional der selektierte Werkstückdatensatz in eine Ausschussliste aufgenommen werden.

In Fig. 2 wird ferner verdeutlicht, dass zu einem selektierten Werkstück Auftragsinformation auf der Anzeige 19 angezeigt werden kann (Monitorverbindung S_{M}). Ferner kann zur Unterstützung einer visuellen Prüfung durch den Bediener 11 die Form des Werkstücks angezeigt werden.

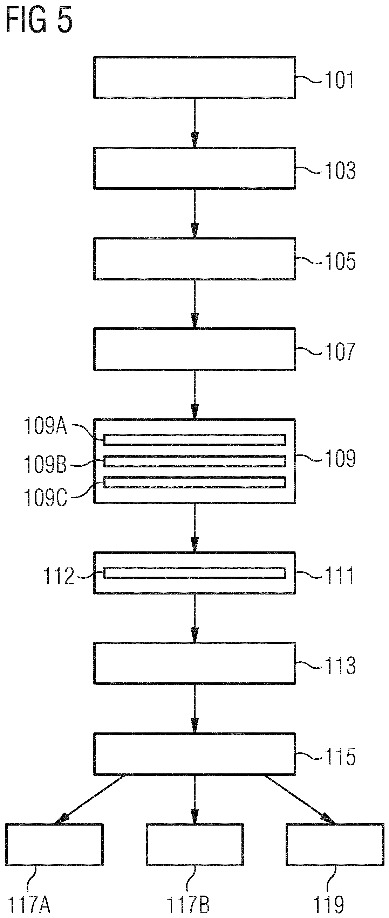

Zusammenfassend zeigt Fig. 5 ein Flussdiagramm zur Verdeutlichung eines beispielhaften Verfahrensablaufs zum Verknüpfen von Information mit einem Werkstückdatensatz eines Werkstücks. Dabei wird davon ausgegangen, dass auf einem Sortiertisch Werkstücke angeordnet sind, die mit einer Flachbettwerkzeugmaschine, insbesondere einer Laserschneid- oder Stanz-Flachbettwerkzeugmaschine, basierend auf einem Bearbeitungsplan erzeugt wurden (Schritt 101).

Im nächsten Schritt wird ein Selektionszeitpunkt durch eine erste Aktion eines Bedieners erfasst (Schritt 103). Die erste Aktion steht dabei in räumlichen Bezug zu dem zu selektierenden Werkstück. Beispielsweise wählt der Bediener ein Werkstück mit einer ersten (spezifischen) Geste (Selektionsgestenbewegung) aus. Diese erste Geste ist z.B. ein schnelles Tippen auf das Werkstück. Die Tippbewegung kann mit einer Kamera oder einem Ortungssystem erfasst werden. Alternativ oder ergänzend kann der Bediener am Handgelenk einen Beschleunigungssensor tragen, der über Funk an einen oder mehrere Empfänger gekoppelt ist. Der Empfänger kann als Teil des MES die Datenauswertung und die Positionsbestimmung sowie die Erkennung der Selektionsgestenbewegung vornehmen. Eine weitere Alternative für die Erkennung der Selektionsgestenbewegung ist die Aktivierung eines drucksensitiven Stifts als erste Aktion. Dieser kann präzise geortet werden und das direkte Tippen auf ein Werkstück kann auch bei eng aneinander liegenden Teilen nicht zu Verwechslungen führen, da die Positionsbestimmung durch den Drucksensor ausgelöst wird.

Der drucksensitive Stift kann einen drucksensitiven Drucksensor, insbesondere in einer Spitze des Eingabestifts, aufweisen und ferner dazu ausgebildet sein, bei Aktivierung des Drucksensors ein Triggersignal auszugeben. So kann ein Aufdrücken des Eingabestifts auf das zu selektierende Werkstück (als Beispiel einer ersten Aktion) zur Aktivierung des Drucksensors und somit zur Ausgabe eines Triggersignals durch den Eingabestift führen. Wird das Triggersignal erfasst, kann der Selektionszeitpunkt als der Zeitpunkt des Erfassens des Triggersignals festgelegt werden.

Zum Selektionszeitpunkt wird eine Position einer Hand des Bedieners im Raum über der Anordnung von Werkstücken mit einem Ortungssystem bestimmt (Schritt 105). Allgemein können die mit dem Ortungssystem erfassten Positionen der Hand auf den Selektionszeitpunkt oder auf ein Zeitfenster um den Selektionszeitpunkt beschränkt werden. Z.B. kann die Position des Handgelenks, das das Armband mit dem Beschleunigungssensor trägt, zum einen über die Innenraum-Lokalisierung oder über das Kamerasystem alleine erfolgen sowie in einer Kombination von beidem.

Aus der bestimmten Position der Hand kann eine Selektionsposition in der Auflageebene bestimmt werden (Schritt 107). Ein Werkstückdatensatz kann aus den Werkstückdatensätzen durch ein Abgleichen der Selektionsposition mit den Lagen und Konturen der Werkstücke (Schritt 109) ausgewählt werden und als ein durch die erste Aktion selektierter Werkstückdatensatz gekennzeichnet werden. Wenn das System z.B. die erste Geste/das Auslösen des drucksensitiven Stifts registriert, kann mithilfe der Position der Hand im Bild zu diesem Zeitpunkt und/oder durch eine Innenraum-Lokalisation der Hand zu diesem Zeitpunkt die Geste mit dem Werkstück verknüpft werden. Dazu kann über das Kamerasystem die aktuelle Blechlage und damit die Lage der Teile auf der Palette/auf dem Sortiertisch festgestellt werden. Ein (Bildverarbeitungs-/Auswerte-) Algorithmus kann nun die Bilddaten und die Positionsdaten des Handgelenks des Bedieners sowie die Daten über die Werkzeuglage und die erkannte Aktion (erste Geste) für eine korrekte Selektion des Werkstücks interpretieren.

Schritt 109 kann ein Erfassen der Lage der Anordnung von Werkstücken in der Auflageebene mit einer Kamera (Schritt 109A) umfassen. Ferner kann Schritt 109 ein Erzeugen transformierter Daten der Lagen und Konturen der Werkstücke durch Transformieren der Lagen und Konturen der Werkstücke in die Auflageebene basierend auf der erfassten Lage der Anordnung von Werkstücken (Schritt 109B) und ein Abgleichen der Selektionsposition mit den transformierten Daten der Lagen und Konturen der Werkstücke (Schritt 109C) umfassen.

Nachdem das Werkstück ausgewählt wurde, wird eine weitere Geste als zweite Aktion ausgeführt (Schritt 111). Der Geste wurde z.B. die Weisung zugeordnet, das Werkstück als Ausschuss zu buchen (Schritt 112) und insbesondere auf eine Ausschussliste zu setzen. Die Grundlage für zumindest die zweite Aktion bildet somit eine Gestenerkennung, die beispielsweise mittels Beschleunigungssensoren an einem Armband vorgenommen werden kann. Der Algorithmus kann nun die selektierten Werkstückdatensätze und die erkannte zweite Geste bzw. die ihr zugeordnete Information für die Benutzereingaben korrekt interpretieren, sodass die zu verbuchende Information aus einer Datenbank des MES ausgelesen werden kann (Schritt 113).

Nun kann die zu verbuchenden Information mit dem selektierten Werkstückdatensatz verknüpft werden (Schritt 115).

Eine weitere Benutzerinteraktion ist für ein Verknüpfen der zu verbuchenden Information mit dem selektierten Werkstückdatensatz (Benutzereingabe) obsolet. Die vorgenommene Benutzereingabe kann über einen Monitor, der z.B. an der Maschinenrückwand angebracht ist, angezeigt werden (Schritt 117A). Diese kann insbesondere zusammen mit werkstückspezifischer Information zu dem durch die erste Aktion selektierten Werkstückdatensatz angezeigt werden, wobei die werkstückspezifische Information optional Kundendaten, Informationen zum nachfolgenden Prozessschritt, eine Anzahl weiterer gleicher Teile, eine zugeordnete Werkstücksammelstelle oder eine Auftragsnummer für das zum selektierten Werkstückdatensatz gehörende Werkstück umfassen kann.

Ferner kann eine Rückmeldung wie ein Vibrationsfeedback oder ein visuelles Feedback oder ein akustisches (Ton/Sprache) Feedback ausgegeben werden (Schritt 117B). Der Bediener kann somit die Durchführung der Eingabe in das System überwachen und/oder überprüfen.

Für erkannte Ausschussteile kann ein Ergänzungsproduktionssignal an das MES ausgegeben werden (Schritt 119). Dort werden z.B. Produktionsparameter des entnommenen Werkstücks mit einem nachfolgenden Bearbeitungsplan abgeglichen. Bei Übereinstimmung der Produktionsparameter mit dem nachfolgenden Bearbeitungsplan und einer Verfügbarkeit einer erneuten Erzeugung des entnommenen Werkstücks, kann der nachfolgende Bearbeitungsplan mit einem Erzeugungsschritt zur Erzeugung eines Ersatzwerkstücks für das Ausschussstück ergänzt werden. Die Erzeugung eines Ersatzwerkstücks kann auch in späteren, nachfolgenden Bearbeitungsplänen vorgesehen werden.

Bezugnehmend auf die Figuren 1 und 2 kann bei den zuvor beispielhaft erläuterten Schritten die Kommunikation auf einer datentechnischen Verbindung des Ortungssystems (z.B. zur Positionsübermittlung) und der Selektionsunterstützungseinheit (z.B. zur Sensorsignalübermittlung) mit der Steuerungseinheit der Flachbettwerkzeugmaschine 3 und/oder dem MES 5 basieren. Der Datenaustausch kann allgemein per Datenkabel mit üblichen Datenverbindungen, z.B. CAN, Profibus, RS232, RS485, USB, LAN etc., erfolgen. Er kann aber insbesondere auch per Infrarot oder Funk (WLAN, WiFi, etc.) erfolgen.

Mit anderen Worten ist es ein Ziel der hierin vorgestellten Konzepte, eine Eingabe durch einen Bediener ("User Input") in Form von Gesten mit einem ausgewählten Bauteil (Werkstück) zu verknüpfen, wobei die Selektion eines Bauteils mit einer vorausgehenden Geste unterstützt wird. Der Bediener kann ohne weitere Eingaben bauteilbezogene Eingaben vornehmen oder Befehle ausführen lassen. Für den Bediener fällt somit eine manuelle Zuordnung von Information zu einem Bauteil weg. Beispielsweise muss eine Verbuchung als Ausschuss einem bestimmten Bauteil nicht manuell zugeordnet werden und eine eingabe an einer Eingabekonsole entfällt.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum Verknüpfen von Information mit einem Werkstückdatensatz eines Werkstücks (9) einer in einer Auflageebene (41) eines Sortiertischs (21) liegenden Anordnung von Werkstücken (9), wobei die Werkstücke (9) mit einer Flachbettwerkzeugmaschine (3), insbesondere einer Laserschneid- oder Stanz-Flachbettwerkzeugmaschine, gemäß einem in einer Steuerungseinheit (8) der Flachbettwerkzeugmaschine (3) abgelegten Bearbeitungsplan (65) aus einem plattenförmigen Material erzeugt wurden und der Bearbeitungsplan (65) Werkstückdatensätze umfasst, in denen Lagen und Konturen der Werkstücke (9) in der Anordnung von Werkstücken (9) abgelegt sind, mit den Schritten:
Erfassen (Schritt 103) eines Selektionszeitpunkts durch eine in räumlichen Bezug zu einem zu selektierenden Werkstück (61) stehende erste Aktion eines Bedieners (11),
Bestimmen (Schritt 105) einer Position einer Hand (75) des Bedieners (11) im Raum über der Anordnung von Werkstücken mit einem Ortungssystem (31) zum Selektionszeitpunkt,
Ableiten (Schritt 107) einer Selektionsposition in der Auflageebene (41) aus der bestimmten Position der Hand (75),
Auswählen (Schritt 109) eines Werkstückdatensatzes aus den Werkstückdatensätzen durch Abgleichen der Selektionsposition mit den Lagen und Konturen der Werkstücke (9) als einen durch die erste Aktion selektierten Werkstückdatensatz,
Erfassen (Schritt 111) einer zweiten Aktion, bei der der Bediener (11) eine Gestenbewegung ausführt, wobei der Gestenbewegung in einer Datenbank (8A) eine zu verbuchende Information zugeordnet ist,
Auslesen (Schritt 113) der zu verbuchenden Information aus der Datenbank (8A) und
Verknüpfen (Schritt 115) der zu verbuchenden Information mit dem selektierten Werkstückdatensatz,
**dadurch gekennzeichnet, dass** für eine Mehrzahl von aufeinanderfolgend erfassten ersten Aktionen eine Mehrzahl von Selektionspositionen abgeleitet wird, zu denen eine Mehrzahl von selektierten Werkstückdatensätze ausgewählt wird, und
die Mehrzahl von selektierten Werkstückdatensätze durch Erfassen der zweiten Aktion einheitlich mit der zu verbuchenden Information verknüpft wird.

2. Verfahren nach Anspruch 1, wobei die erste Aktion eine Selektionsgestenbewegung ist, die der Bediener (11) mit der Hand (75) über der Anordnung von Werkstücken (9) ausführt und die mit einem an der Hand (75) getragenen Beschleunigungssensor (33A) oder mit dem Ortungssystem (31) erfasst wird.

3. Verfahren nach Anspruch 2, wobei die Selektionsgestenbewegung eine Tippbewegung auf das zu selektierende Werkstück (61) ist und
die Tippbewegung mit dem Ortungssystem (31) erfasst wird und als Positionsdaten von aufgereihten Positionen der Hand (75) ausgegeben wird, wobei eine Position in der Auflageebene (41), die in Verlängerung der aufgereihten Positionen liegt, als die Selektionsposition abgeleitet wird.

4. Verfahren nach einem der vorhergehenden Ansprüche, wobei der Bediener eine Selektionsunterstützungseinheit (33), insbesondere einen Handschuh, ein Armband oder einen Eingabestift, zur Bestimmung der Position der Hand (75) des Bedieners (11) trägt, und
wobei die Selektionsunterstützungseinheit (33) als Teil des Ortungssystems (31) ausgebildet ist und/oder ein oder mehrere der folgenden aufweist: einen Beschleunigungssensor (33A), einen aktiven Sender und/oder einen passiven Sender eines Ortungssystems (31).

5. Verfahren nach einem der vorhergehenden Ansprüche, wobei das Ortungssystems (31) zur Bestimmung der Position der Hand (75) des Bedieners (11) eine Position eines in der Hand gehaltenen Eingabestifts (63) erfasst, und
wobei die erste Aktion ein Auftippen des Eingabestifts (63) auf das zu selektierende Werkstück (61) umfasst und Positionsdaten einer Spitze des Eingabestifts (63) in der Auflageebene (41) als Selektionsposition abgeleitet werden.

6. Verfahren nach Anspruch 5, wobei der Eingabestift (63) einen drucksensitiven Drucksensor, insbesondere in einer Spitze des Eingabestifts (63), aufweist und ferner dazu ausgebildet ist, bei Aktivierung des Drucksensors ein Triggersignal auszugeben, und
wobei die erste Aktion ein Aufdrücken des Eingabestifts (63) auf das zu selektierende Werkstück (61) zur Aktivierung des Drucksensors und Ausgabe eines Triggersignals durch den Eingabestift (63) umfasst, aufweisend die Schritte:
Erfassen des Triggersignals und Bestimmen des Selektionszeitpunkts als den Zeitpunkt des Erfassens des Triggersignals und
Beschränken der mit dem Ortungssystem (31) erfassten Positionen der Hand (75) auf den Selektionszeitpunkt oder auf ein Zeitfenster um den Selektionszeitpunkt.

7. Verfahren nach einem der vorhergehenden Ansprüche, wobei das Ortungssystem (31) dazu ausgebildet ist, Bilddaten (71) von einer oder von mehreren Kameras (45) zur bildunterstützen Bestimmung der Position der Hand des Bedieners (11) auszuwerten, oder
wobei das Ortungssystem (31) auf einer ultra-wideband Ortung einer getragenen mobile Einheit (33B) basiert und das Bestimmen einer Position einer Hand (75) des Bedieners (11), insbesondere einer Gestenbewegung, im Raum durch Auswerten der mit dem Ortungssystem (31) gewonnenen Positionsdaten der mobilen Einheit (33B) durchgeführt wird.

8. Verfahren nach einem der vorhergehenden Ansprüche, wobei das Abgleichen der Selektionsposition mit den Lagen und Konturen der Werkstücke (9) umfasst:
Erfassen (Schritt 109A) der Lage der Anordnung von Werkstücken (9) in der Auflageebene (41) mit einer Kamera (45),
Erzeugen (Schritt 109B) transformierter Daten der Lagen und Konturen der Werkstücke (9) durch Transformieren der Lagen und Konturen der Werkstücke (9) in die Auflageebene (45) basierend auf der erfassten Lage der Anordnung von Werkstücken (9) und
Abgleichen (Schritt 109C) der Selektionsposition mit den transformierten Daten der Lagen und Konturen der Werkstücke (9).

9. Verfahren nach einem der vorhergehenden Ansprüche, wobei die zu verbuchende Information eine Klassifizierung als Ausschussteil ist, aufweisend den Schritt:
Aufnehmen des selektierten Werkstückdatensatzes in eine Ausschussliste.

10. Verfahren nach einem der vorhergehenden Ansprüche, aufweisend den Schritt:
Anzeigen (Schritt 117A) von werkstückspezifischer Information zu dem durch die erste Aktion selektierten Werkstückdatensatz auf einer Anzeigeeinheit (19), wobei die werkstückspezifische Information Kundendaten, Informationen zum nachfolgenden Prozessschritt, eine Anzahl weiterer gleicher Teile, eine zugeordnete Werkstücksammelstelle oder eine Auftragsnummer für das zum selektierten Werkstückdatensatz gehörende Werkstück (61) umfasst.

11. Verfahren nach Anspruch 10 aufweisend den Schritt: Erweitern der angezeigten werkstückspezifischen Information um die mit dem selektierten Werkstückdatensatz (61) verknüpfte, zu verbuchende Information.

12. Verfahren nach einem der vorhergehenden Ansprüche, aufweisend den Schritt:
Ausgeben (Schritt 117B) einer Rückmeldung an den Bediener (11) nach erfolgter Verknüpfung, wobei die Rückmeldung durch einen Vibrationsfeedback, ein visuelles Feedback oder ein akustisches Feedback erfolgt.

13. Flachbettwerkzeugmaschine (3), insbesondere Laserschneid- oder Stanz-Flachbettwerkzeugmaschine (3), mit
einer Bearbeitungseinheit, insbesondere einer Laserschneid- oder Stanz-Bearbeitungseinheit,
einer Steuerungseinheit (8), in der ein Bearbeitungsplan (65) abgelegt ist, zur Ansteuerung der Bearbeitungseinheit zur Erzeugung von räumlich nebeneinander angeordneten Werkstücken (9),
einem Sortiertisch (21) zum Bereitstellen der erzeugten und in einer Auflageebene (45) nebeneinander angeordneten Werkstücke (9) zum Absortieren durch einen Bediener (11) und
einem Ortungssystem (31) zum Bestimmen einer Position einer Hand (75) des Bedieners (11) im Raum,
wobei die Steuerungseinheit (8) zum Durchführen eines Verfahrens nach einem der vorhergehenden Ansprüche ausgebildet ist.

14. Flachbettwerkzeugmaschine (3) nach Anspruch 13,
mit einem an der Hand (75) getragenen Beschleunigungssensor (33B) und/oder
einem Eingabestift (63) zur Erleichterung der Ortung, wobei der Eingabestift (63) als drucksensitiver Eingabestift mit einem Drucksensor ausgebildet ist, der bei Aufdrücken des Eingabestifts (63) auf ein Werkstück (61) ein Triggersignal zum Beschränken der mit dem Ortungssystem (31) erfassten Positionen der Hand (75) für das Erfassen einer Gestenbewegung auf ein Zeitfenster um das Erfassen des Triggersignals veranlasst, und/oder wobei der Eingabestift (63) einen aktiven Sender und/oder einen passiven Sender aufweist, dessen Position vom Ortungssystem (31) als Position der Hand des Bedieners (11) erfassbar ist.

15. Flachbettwerkzeugmaschine (3) nach Anspruch 13 oder 14, wobei das Ortungssystem (31) mindestens eine Antenne (35) zum Empfangen von Signalen einer nahe der Hand (75) getragenen Selektionsunterstützungseinheit (33) aufweist und/oder
wobei das Ortungssystem (31) eine oder mehrere Kameras (45) zur Bilderfassung der Position der Hand (75) des Bedieners (11) und/oder einer Selektionsunterstützungseinheit (33) aufweist.

## Claims

1. A method for linking information with a workpiece data record of a workpiece (9) of an arrangement of workpieces (9) lying in a support plane (41) of a sorting table (21), wherein the workpieces (9) were produced from a planar material using a flatbed machine tool (3), in particular a laser cutting or punching flatbed machine tool, according to a processing plan (65) stored in a control unit (8) of the flatbed machine tool (3), and the processing plan (65) comprises workpiece data records in which relative positions and contours of the workpieces (9) in the arrangement of workpieces (9) are stored, the method having the following steps:
registering (step 103) a selection time by way of a first action of a user (11), the action being in a spatial relationship to a workpiece (61) to be selected,
determining (step 105), using a locating system (31), a position of a hand (75) of the user (11) in the space above the arrangement of workpieces at the selection time,
deriving (step 107) a selection position in the support plane (41) from the determined position of the hand (75),
selecting (step 109) a workpiece data record from the workpiece data records by comparing the selection position with the positions and contours of the workpieces (9) as a workpiece data record selected by the first action,
registering (step 111) a second action in which the user (11) makes a gesturing motion, wherein an information item to be logged in a database (8A) is assigned to the gesturing motion,
reading out (step 113) the information item to be logged from the database (8A), and
linking (step 115) the information item to be logged with the selected workpiece data record,
**characterized in that** a plurality of selection positions is derived for a plurality of successively registered first actions, a plurality of selected workpiece data records being selected for the selection positions, and
the plurality of selected workpiece data records being linked uniformly with the information item to be logged by registering the second action.

2. The method according to claim 1, wherein the first action is a selection gesturing motion that the user (11) makes with the hand (75) above the arrangement of workpieces (9), the selection gesturing motion being registered using an acceleration sensor (33A) worn on the hand (75) or using the locating system (31).

3. The method according to claim 2, wherein the selection gesturing motion is a tapping motion on the workpiece (61) to be selected and
the tapping motion is registered using the locating system (31) and is output as position data from a row of positions of the hand (75), wherein a position in the support plane (41) lying in the extension of the row of positions is derived as the selection position.

4. The method according to one of the preceding claims, wherein the user wears a selection assistance unit (33), in particular a glove, an arm band or a stylus, for the determination of the position of the hand (75) of the user (11), and
wherein the selection assistance unit (33) is designed as part of the locating system (31) and/or has one or more of the following: an acceleration sensor (33A), an active transmitter and/or a passive transmitter of a locating system (31).

5. The method according to one of the preceding claims, wherein the locating system (31) for the determination of the position of the hand (75) of the user (11) registers a position of a stylus (63) held in the hand, and
wherein the first action comprises the stylus (63) being tapped onto the workpiece (61) to be selected, and position data of a tip of the stylus (63) in the support plane (41) are derived as the selection position.

6. The method according to claim 5, wherein the stylus (63) comprises a pressure-sensitive pressure sensor, in particular in a tip of the stylus (63), and is further designed to output a trigger signal when the pressure sensor is activated, and
wherein the first action comprises pressing the stylus (63) onto the workpiece (61) to be selected in order to activate the pressure sensor and to output a trigger signal by the stylus (63), the method comprising the steps of:
registering the trigger signal and determining the selection time as the time of registration of the trigger signal and
restricting the positions of the hand (75) registered by the locating system (31) to the selection time or to a time window around the selection time.

7. The method according to one of the preceding claims, wherein the locating system (31) is designed to evaluate image data (71) from one or more cameras (45) for the image-assisted determination of the position of the hand of the user (11), or
wherein the locating system (31) is based on an ultra-wideband locating of a worn mobile unit (33B), and the determination of a position of a hand (75) of the user (11), in particular a gesturing motion, in space is carried out by evaluating the position data of the mobile unit (33B) obtained by the locating system (31).

8. The method according to one of the previous claims, wherein the comparing of the selection position with the positions and contours of the workpieces (9) comprises:
registering (step 109A) the position of the arrangement of workpieces (9) in the support plane (41) using a camera (45),
generating (step 109B) transformed data of the positions and the contours of the workpieces (9) by transforming the positions and the contours of the workpieces (9) into the support plane (45) on the basis of the registered position of the arrangement of workpieces (9), and
comparing (step 109C) the selection position with the transformed data of the positions and the contours of the workpieces (9).

9. The method according to one of the preceding claims, wherein the information item to be logged is a classification as a rejected part, comprising the step of:
including the selected workpiece data record in a reject list.

10. The method according to one of the preceding claims, comprising the step of:
displaying (step 117A), on a display unit (19), workpiece-specific information concerning the workpiece data record selected by the first action, wherein the workpiece-specific information comprises customer data, information concerning the subsequent process step, a number of further parts that are the same, an assigned workpiece collection location or an order number for the workpiece (61) belonging to the selected workpiece data record.

11. The method according to claim 10, comprising the step: supplementing the displayed workpiece-specific information with the information item to be logged that is linked with the selected workpiece data record (61).

12. The method according to one of the preceding claims, comprising the step of:
outputting (step 1178) feedback to the user (11) after linking, wherein the feedback is accomplished using vibration feedback, visual feedback or acoustic feedback.

13. A flatbed machine tool (3), in particular a laser cutting or punching flatbed machine tool (3), comprising
a processing unit, in particular a laser cutting or punching processing unit,
a control unit (8) in which a processing plan (65) is stored, the control unit driving the processing unit to produce workpieces (9) spatially arranged next to one another,
a sorting table (21) for providing the produced workpieces (9), which are arranged next to one another in a support plane (45), for sorting out by a user (11), and
a locating system (31) for determining a position of a hand (75) of the user (11) in space,
wherein the control unit (8) is designed to carry out a method according to one of the preceding claims.

14. The flatbed machine tool (3) according to claim 13,
having an acceleration sensor (33B) worn on the hand (75) and/or
a stylus (63) for simplifying locating, wherein the stylus (63) is designed as a pressure-sensitive stylus having a pressure sensor, the stylus (63), when it is pressed on a workpiece (61), issuing a trigger signal for restricting the positions of the hand (75) for registering a gesturing motion, registered using the locating system (31), to a time window around the registration of the trigger signal, and/or wherein the stylus (63) has an active transmitter and/or passive transmitter, the position of which is able to be registered by the locating system (31) as the position of the hand of the user (11).

15. The flatbed machine tool (3) according to claim 13 or 14, wherein the locating system (31) has at least one antenna (35) for receiving signals from a selection assistance unit (33) worn near the hand (75), and/or
wherein the locating system (31) has one or more cameras (45) for capturing images of the position of the hand (75) of the user (11) and/or of a selection assistance unit (33).

## Revendications

1. Procédé de liaison des informations à un jeu de données de pièce d'une pièce (9) d'un agencement de pièces (9) se trouvant dans un plan de support (41) d'une table de tri (21), dans lequel les pièces (9) sont fabriquées à partir d'un matériau en forme de plaque avec une machine-outil à plateau (3), en particulier une machine-outil à plateau de découpe laser ou de poinçonnage, selon un plan de fabrication (65) stocké dans une unité de commande (8) de la machine-outil à plateau (3), et le plan de fabrication (65) comprend des jeux de données de pièce dans lesquels les positions et les contours des pièces (9) dans l'agencement de pièces (9) sont stockés, comprenant les étapes suivantes :
la détection (étape 103) d'un temps de sélection par une première action d'un opérateur (11) qui est spatialement lié à une pièce (61) à sélectionner,
la détermination (étape 105) de la position d'une main (75) de l'opérateur (11) dans l'espace au-dessus de l'agencement de pièces avec un système de localisation (31) au temps de sélection,
la déduction (étape 107) d'une position de sélection dans le plan de support (41) à partir de la position déterminée de la main (75),
la sélection (étape 109) d'un jeu de données de pièce à partir des jeux de données de pièce en comparant la position de sélection aux positions et aux contours des pièces (9) en tant que jeu de données de pièce sélectionné par la première action,
la détection (étape 111) d'une deuxième action dans laquelle l'opérateur (11) effectue un mouvement gestuel, dans lequel le mouvement gestuel est associé à de l'information à enregistrer dans une base de données (8A),
la lecture (étape 113) de l'information à enregistrer dans la base de données (8A), et
la liaison (étape 115) de l'information à enregistrer au jeu de données de pièce sélectionné,
**caractérisé en ce que** pour une pluralité de premières actions détectées successivement est dérivée une pluralité de positions de sélection pour lesquelles une pluralité de jeux de données de pièce sélectionnés sont choisis, et
les jeux de la pluralité de jeux de données de pièce sélectionnés sont liés de manière uniforme à l'information à enregistrer par la détection de la deuxième action.

2. Procédé selon la revendication 1, dans lequel la première action est un mouvement gestuel de sélection que l'opérateur (11) effectue avec la main (75) sur l'agencement de pièces (9) et qui est détecté par un capteur d'accélération (33A) porté à la main (75) ou par le système de localisation (31).

3. Procédé selon la revendication 2, dans lequel le mouvement gestuel de sélection est un mouvement de tapotement sur la pièce (61) à sélectionner, et
le mouvement de tapotement est détecté par le système de localisation (31) et est délivré sous forme de données de position à partir de positions alignées de la main (75), dans lequel une position dans le plan de support (41), qui se trouve dans le prolongement des positions alignées, est dérivée comme étant la position de sélection.

4. Procédé selon l'une des revendications précédentes, dans lequel l'opérateur porte une unité d'aide à la sélection (33), en particulier un gant, un bracelet ou un stylet de saisie, pour déterminer la position de la main (75) de l'opérateur (11), et
dans lequel l'unité d'aide à la sélection (33) est conçue comme une partie du système de localisation (31) et/ou comporte un ou plusieurs des éléments suivants : un capteur d'accélération (33A), un émetteur actif et/ou un émetteur passif d'un système de localisation (31).

5. Procédé selon l'une des revendications précédentes, dans lequel le système de localisation (31) détecte la position d'un stylet de saisie (63) tenu dans la main pour déterminer la position de la main (75) de l'opérateur (11), et
dans lequel la première action comporte le tapotement du stylet de saisie (63) sur la pièce (61) à sélectionner et des données de position d'une pointe du stylet de saisie (63) dans le plan de support (41) sont dérivées comme étant la position de sélection.

6. Procédé selon la revendication 5, dans lequel le stylet de saisie (63) comporte un capteur de pression sensible à la pression, en particulier dans une pointe du stylet de saisie (63), et est en outre conçu pour émettre un signal de déclenchement lorsque le capteur de pression est activé, et
dans lequel la première action consiste à appuyer le stylet de saisie (63) sur la pièce (61) à sélectionner pour activer le capteur de pression et à émettre un signal de déclenchement via le stylet de saisie (63), comprenant les étapes suivantes :
la détection du signal de déclenchement et détermination du temps de sélection comme moment de détection du signal de déclenchement, et
la limitation des positions de la main (75) détectées par le système de localisation (31) au temps de sélection ou dans une fenêtre temporelle autour du temps de sélection.

7. Procédé selon l'une des revendications précédentes, dans lequel le système de localisation (31) est conçu pour évaluer des données d'image (71) provenant d'une ou plusieurs caméras (45) pour déterminer la position de la main de l'opérateur (11) par l'intermédiaire d'images, ou
dans lequel le système de localisation (31) est basé sur une localisation à ultra large bande d'une unité mobile portée (33B), et la détermination d'une position dans l'espace d'une main (75) de l'opérateur (11), en particulier d'un mouvement gestuel, est effectuée en évaluant les données de position de l'unité mobile (33B) obtenues par le système de localisation (31).

8. Procédé selon l'une des revendications précédentes, dans lequel la comparaison de la position de sélection aux positions et aux contours des pièces (9) comprend :
la détection (étape 109A) de la position de l'agencement de pièces (9) dans le plan de support (41) avec une caméra (45),
la génération (étape 109B) de données transformées des positions et des contours des pièces (9) en transformant les positions et les contours des pièces (9) dans le plan de support (45) sur la base de la position détectée de l'agencement de pièces (9), et
la comparaison (étape 109C) de la position de sélection aux données transformées des positions et des contours des pièces (9).

9. Procédé selon l'une des revendications précédentes, dans lequel l'information à enregistrer est un classement en pièce de rebut comprenant l'étape suivante :
l'ajout du jeu de données de pièce sélectionné à une liste de rebut.

10. Procédé selon l'une des revendications précédentes, comprenant l'étape suivante :
l'affichage (étape 117A) de l'information spécifique à la pièce concernant le jeu de données de pièce sélectionné par la première action sur une unité d'affichage (19), dans lequel l'information spécifique à la pièce comprend des données client, des informations concernant l'étape de processus suivante, un nombre d'autres pièces identiques, un point de collecte de pièces associé ou un numéro de commande pour la pièce (61) appartenant au jeu de données de pièce sélectionné.

11. Procédé selon la revendication 10, comprenant l'étape suivante : l'extension des informations spécifiques à la pièce affichées pour inclure l'information à enregistrer qui est liée au jeu de données de pièce sélectionné (61).

12. Procédé selon l'une des revendications précédentes, comprenant l'étape suivante :
l'envoi (étape 117B) d'un retour d'information à l'opérateur (11) après que la liaison a eu lieu, dans lequel le retour d'information est fourni par un retour de vibration, un retour visuel ou un retour acoustique.

13. Machine-outil à plateau (3), en particulier machine-outil à plateau de découpe laser ou de poinçonnage (3), comportant
une unité de traitement, en particulier une unité de traitement par découpe laser ou poinçonnage,
une unité de commande (8), dans laquelle un plan de fabrication (65) est stocké pour commander l'unité de traitement afin de produire des pièces (9) agencées spatialement les unes à côté des autres,
une table de tri (21) pour fournir les pièces (9) produites et agencées les unes à côté des autres dans un plan de support (45) pour un tri par un opérateur (11), et
un système de localisation (31) pour déterminer la position d'une main (75) de l'opérateur (11) dans l'espace,
dans laquelle l'unité de commande (8) est conçue pour exécuter un procédé selon l'une des revendications précédentes.

14. Machine-outil à plateau (3) selon la revendication 13,
comportant un capteur d'accélération (33B) porté dans la main (75) et/ou
un stylet de saisie (63) pour faciliter la localisation, dans laquelle le stylet de saisie (63) est conçu comme un stylet de saisie sensible à la pression, doté d'un capteur de pression qui, quand le stylet de saisie (63) est pressé sur une pièce (61), induit un signal de déclenchement pour limiter les positions de la main (75) détectées avec le système de localisation (31) pour la détection d'un mouvement gestuel dans une fenêtre temporelle autour de la détection du signal de déclenchement, et/ou dans laquelle le stylet de saisie (63) comporte un émetteur actif et/ou un émetteur passif dont la position peut être détectée par le système de localisation (31) comme étant la position de la main de l'opérateur (11).

15. Machine-outil à plateau (3) selon la revendication 13 ou 14, dans laquelle le système de localisation (31) comporte au moins une antenne (35) pour recevoir des signaux provenant d'une unité d'aide à la sélection (33) portée à proximité de la main (75), et/ou
dans laquelle le système de localisation (31) comporte une ou plusieurs caméras (45) pour capturer des images de la position de la main (75) de l'opérateur (11) et/ou une unité d'aide à la sélection (33).
